# EUROPEAN PATENT SPECIFICATION

(11) **EP 3 879 790 B1**
(45) Date of publication and mention of the grant of the patent: **03.01.2024**
(21) Application number: 20162026.7
(22) Date of filing: 10.03.2020
(51) Int. Cl.: H04L 67/125, H04L 67/00

(54) **CONFIGURATION METHOD AND INTERNET OF THINGS DEVICE**
KONFIGURATIONSVERFAHREN UND INTERNET-DER-DINGE-VORRICHTUNG
PROCÉDÉ DE CONFIGURATION ET DISPOSITIF DE L'INTERNET DES OBJETS

(43) Date of publication of application: 15.09.2021
(73) Proprietor: ABB Schweiz AG, 5400 Baden (CH)
(72) Inventor: MEYER, Niklaus, 8308 Illnau (CH); FERRANTI, Ettore, 8165 Schleinikon (CH); GERSPACH, Stephan, 79737 Herrischried (DE); OBRIST, Michael, 5417 Untersiggenthal (CH)
(74) Representative: Zimmermann & Partner Patentanwälte mbB

(56) References cited:
- US-A1- 2019 123 967
- Anonymous: "azure-content/iot-hub-devguide-device-twi ns.md at master . blumu/azure-content . GitHub", , 1 October 2016 (2016-10-01), XP055483188, Retrieved from the Internet: URL:https://github.com/blumu/azure-content /blob/master/articles/iot-hub/iot-hub-devg uide-device-twins.md [retrieved on 2018-06-12]

## Description

### FIELD OF THE INVENTION

The invention relates to industrial systems, in particular electric power systems such as substation automation (SA) systems. The invention relates to techniques that allow data of industrial devices, such as devices of an SA system, to be collected for generating and/or maintaining a digital twin.

### BACKGROUND OF THE INVENTION

In order to ensure stable operation of industrial systems, such substation automation systems, microgrids, distribution grids or transmission grids, digital twins may be useful. Such digital twins may be used for simulating operation of the industrial system, performing maintenance and/or reconfiguration tasks, or performing other control operations.

H. Zhang et al., "A digital twin-based approach for designing and decoupling of hollow glass production line", IEEE Access, Vol. 5, 2017, pp. 26901-26911, discloses a method that uses a digital twin-based approach for rapid individualized designing of a hollow glass production line. The digital twin is used to validate a production line solution in a design and pre-production phase.

US 2016/0333854 A1 discloses a digital twin interface for managing a wind farm having a plurality of wind turbines. The digital twin interface includes a graphical user interface (GUI) displaying a digital equivalent of the wind farm. The interface also includes one or more control features configured to optimize performance of the wind farm.

When using Internet of Things (IoT) techniques in association with an industrial system, such as a substation automation system, IoT devices such as Edges, Gateways, etc. can be used to collect data from primary equipment (circuit breakers, transformers, ...) over industry standard protocol(s) such as IEC61850 or modbus. A configuration of the IoT device is typically required to perform the collection over the industrial protocol. Such a configuration of the IoT device can instruct a data collection logic of the IoT device about which protocol addresses to collect the data from, how often to read the data, how to transform the data to a custom data structure, and how to submit it to a cloud platform.

In order to perform the IoT device configuration, various techniques can be considered.

In one approach, the protocol configuration is hardcoded in the IoT device. Such an approach does not require on-site personnel. However, the data collection logic of the IoT device is limited to a few industrial devices and cannot be configured or changed by the user. This limited flexibility may undesirably limit the use of the IoT device. For example, when new industrial devices are deployed that were not known at the time at which the protocol configuration is hardcoded in the IoT device, the IoT device may no longer be operable with such new industrial devices.

In a different approach, the protocol configuration is edited by a human expert and stored on the IoT device holding the data collection logic. This approach affords enhanced versatility. However, on-site personnel or a remote access to the IoT device is required to modify the configuration on the IoT device. On-site personnel adds to the complexity of the configuration task. Remote control of the configuration process for the data collection logic can give rise to additional security risks. In either case, the process is error-prone.

In yet another approach, special messages can be used to transfer files or other information to the IoT device. In this case, additional transfer channels are required to push the files to the IoT device.

Thus, these approaches to configuring the data collection logic of an IoT device that collects data from devices of an industrial system have various shortcomings. For illustration, the various approaches mentioned above handle protocol configurations in ways that limit their applicability to a limited number of selected industrial devices and/or selected protocols, or that require configuration by on-site personnel.

US 2019/0123967 A1 discloses a technique in which a mapping is established between IoT devices that are tenants of an IoT support service, and tenants of a first third-party cloud service. On the IoT support service, device twins are stored, such that each device twin corresponds to a corresponding IoT device, and such that each device twins includes at least a first section that includes properties of the corresponding IoT device, and a second section that includes properties associated with the first third-party cloud service. The IoT support service is used to invoke a first method associated with at least one IoT device based on metadata in at least one corresponding device twin. The first method is associated with the first third-party cloud service.

Document "azure-content" (retrieved via URL https://github.com/blumu/azure-content/blob/master/articles/iot-hub/iot-hub-devguide-device-twins.md) describes device twins as JSON documents that store device state information, and describes the structure of the device twin and the operations that device apps and back ends can perform on device twins.

### SUMMARY

There is a continued need in the art for improved methods, devices, and systems for configuring the data collection logic of an Internet of Things (IoT) device deployed in an industrial IoT solution. There is a continued need in the art for improved methods, devices, and systems for configuring the data collection logic of an IoT device that mitigates some of the above-described shortcomings.

It is an object of the invention to provide improved techniques for configuring the data collection logic of an IoT device. It is an object of the invention to provide techniques for configuring the data collection logic of an IoT device that allow the IoT device to be used with an industrial device (such as a primary or secondary device of a substation automation system) for which the protocol configuration has not previously been hardcoded into the IoT device. It is an object of the invention to provide techniques that do not require the presence of on-site personnel to configure or reconfigure the data collection logic of an IoT device.

Methods, devices, and systems as recited in the independent claims are provided. The dependent claims define preferred embodiments.

Embodiments of the invention use an IoT platform to store protocol configurations of industrial devices inside the device twin data representing the connected industrial device. The device twin is therefore used both to store the data and configuration of a connected industrial device, forming a holistic view of the device. Bidirectional synchronization of the device twin can ensure that the IoT device receives the configuration and allows the IoT device to correctly configure the data collection logic.

The IoT platform can be a cloud (including server(s) that may be off-site from the industrial system that includes the industrial devices) or one or several server(s) or computer(s) that may be located on-site at the industrial system.

The device twin preferably uses a strongly typed definition to model data of the device twin and the configuration associated with the respective industrial device.

A protocol configuration can thus be modified inside the IoT platform (e.g., inside the cloud) and distributed to one or many IoT devices using different protocols.

The industrial devices may include devices having mechanically movable components, sensors, actuators, merging units, protection relays, circuit breakers, transformers, generators, or other devices.

The industrial devices may comprise device of an industrial automation control system, in particular of a substation automation system.

The industrial devices may comprise primary or secondary devices of an electric power system.

In any one of the disclosed embodiments, the configuration information may be stored as part of the device twin in the loT platform.

Various effects and advantages are attained by the methods and computing systems according to the invention. For illustration, storing the configuration inside a well-defined device twin data structure provides several benefits over traditional approaches. New industrial devices can be connected to the system on-the-fly without requiring dedicated effort as the configuration may be tied to an industrial protocol, but independent of the industrial device. The generic concept and structure of the device twin configuration data allows the configuration for different industry protocols to use the same concepts and infrastructure.

The loT device can be reconfigured or adapted to a new industrial device, without being limited to a specific number of pre-determined industrial devices and or a protocols and without requiring on-site personnel to be present for the adaptation or reconfiguration of the IoT device.

The techniques disclosed herein can be applied to various industrial systems, such as substation automation, electric grids, microgrids, distributed energy resources, distribution or transmission networks, without being limited thereto.

### BRIEF DESCRIPTION OF THE DRAWINGS

The subject-matter of the invention will be explained in more detail with reference to preferred exemplary embodiments which are illustrated in the attached drawings, in which:
Figure 1 is a block diagram representation of a system according to an embodiment.
Figure 2 is a flow chart of a method according to an embodiment.
Figure 3 is a flow chart of a method according to an embodiment.
Figures 4 and 5 are block diagram representations of a system according to an embodiment.
Figure 6 is a block diagram representation of a system according to an embodiment.

### DETAILED DESCRIPTION OF EMBODIMENTS

Exemplary embodiments of the invention will be described with reference to the drawings in which identical or similar reference signs designate identical or similar elements. While some embodiments will be described in the context of specific industrial systems, such as substation automation systems, electric grids, microgrids, distributed energy resources, distribution or transmission networks, the embodiments are not limited thereto.

While exemplary embodiments will be described in the context of a specific number of industrial devices coupled to an Internet of Things (IoT) device, the number of industrial devices is not particularly limited. It will be appreciated that greater or smaller numbers of industrial devices may be coupled to an loT device.

It will be appreciated that, as used herein, the term "device twin" refers to a digital twin of an industrial device. The term "industrial devices" used herein refers to devices that include devices of power systems, without being limited thereto.

The features of embodiments may be combined with each other, unless specifically noted otherwise.

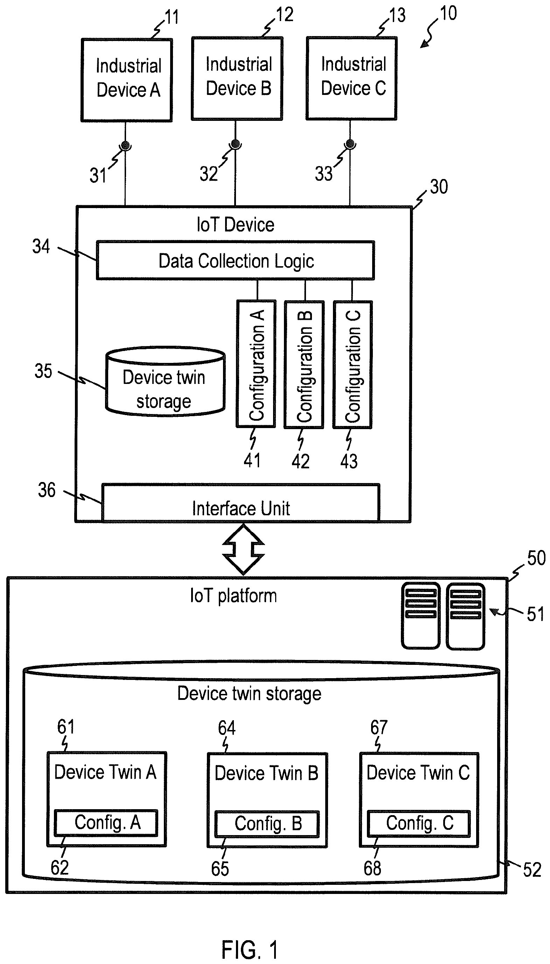

Figure 1 is a block diagram of system that includes an industrial system 10, an IoT device 30, and an IoT platform 50, which may be implemented by a cloud. The industrial system 10 comprises a plurality of industrial devices 11, 12, 13 that may be communicatively coupled to the IoT device 30.

The industrial system 10 may be a substation or substation automation system. The industrial devices 11, 12, 13 may include primary and/or secondary devices of the substation automation system. The industrial devices 11, 12, 13 may be other devices of an electric power system are of another industrial system. For illustration, the industrial system 10 may be a distributed energy resource (DER) or microgrid.

The loT device 30 may be an Edge or Gateway.

The IoT device 30 is operative to collect data from the industrial devices 11, 12, 13. The IoT device 30 has one or several first interfaces 31, 32, 33 to communicatively couple the IoT device 30 to the industrial devices 11, 12, 13. The IoT device 30 may be adapted to read data from the industrial devices 11, 12, 13, even when the industrial devices 11, 12, 13 operate in accordance with two or more different industrial protocols. For example, a first industrial device 11 may be an IEC61850-conformant device, and a second industrial device 12 may be a modbus-conformant device. Accordingly, the first interfaces 31, 32, 33 may include different interfaces for retrieving data from the IEC61850-conformant device and from the modbus-conformant device.

The IoT device 30 performs the data collection based on a data control logic 34. The data control logic determines 34 when and how data are read from or written to the industrial devices 11, 12, 30. The IoT device 30 may have one or several circuits, such as integrated circuits, including one or several of the following: processors, microprocessors, controllers, microcontrollers, application specific integrated circuits, to execute the data control logic 34 and to control the data control logic 34 in accordance with techniques that will be described in more specifically below.

The IoT device 30 has a device twin storage 35, which may be implemented as a storage device of a memory. Data collected from the industrial devices 11, 12, 13 may be stored in the device twin storage 35, optionally after additional processing. For illustration, the data collected from the industrial devices 11, 12, 13 may be used to adjust model parameters of the device twins in the device twin storage 35.

The IoT device 30 has a second interface 36, which may be a wired or wireless interface adapted to communicate with a wide area network or the internet. A secure communication channel may be established between the IoT device 30 and the IoT platform 50. The secure communication channel may be used for a bidirectional synchronization of device twin data stored in the IoT device and in the IoT platform 50.

The loT platform 50 may be implemented as loT cloud platform. The IoT cloud 50 platform may include one or several computers 51, servers 51 or server farms.

The IoT platform 50 may include one or several computer(s) or server(s), at least some of which may be provided on-site in the industrial system 10.

The IoT platform 50 includes a storage device 52 for storing device twin data. The device twin data 61, 62, 63 associated with the several industrial devices 11, 12, 13 may include data that is the result of a synchronization between the IoT device 30 and the IoT platform 50.

In the device twin data 61, 64, 67, the storage device 52 stores configuration information 62, 65, 68 respectively associated with one of the industrial devices 11, 12, 13. The configuration information 62, 65, 68 may be present even when the IoT platform 50 has not yet received any data collected by the IoT device 30. The configuration information 62, 65, 68 may provide instructions for how the data collection logic 34 is to collect and, optionally, process and transmit data from the industrial device represented by the digital twin in which the configuration information is stored.

The device twin 61, 64, 67 may preferably use a defined, strongly typed definition to model data and the configuration information 62, 65, 68.

The configuration information 62, 65, 68 may specify relevant protocol parameters that are to be used by the IoT device 30 for collecting data from the associated industrial device 11, 12, 13. For illustration, first configuration information 62 stored in first device twin data 61 may define protocol parameters used by the loT device 30 to configure the data collection logic 34 of the IoT device 30 for collecting data from the first industrial device 11. Second configuration information 65 stored in the second device twin data 64 may define protocol parameters used by the loT device 30 to configure the data collection logic 34 of the IoT device 30 for collecting data from the second industrial device 12. Third configuration information 68 stored in the second device twin data 67 may define protocol parameters used by the loT device 30 to configure the data collection logic 34 of the IoT device 30 for collecting data from the third industrial device 13.

The configuration information 62, 65, 68 may include the following parameters in isolation or in combination:
- protocol address of datapoints for read, write, and/or execute operations;
- read intervals;
- timeouts;
- rules for data transformation;
- parameters of data transmission from the IoT device to the loT platform.

During operation of the system, bidirectional synchronization between the IoT device 30 and the IoT platform 50 may cause the IoT device 30 to retrieve the configuration information 62, 65, 68 from the IoT platform 50. The configuration information 62, 65, 68 may be stored locally in the IoT device 30 as local configuration information 41, 42, 43 and/or may be processed further. In either case, the configuration information 62, 64, 68 associated with the protocols of the industrial devices 11, 12, 13 connected to the IoT device 30 may be used to control the data collection logic 34.

The IoT device 30 may then automatically use the retrieved configuration information when collecting data from the industrial devices 11, 12, 13 connected to the loT device 30.

The configuration information may additionally also determine how the collected data is to be processed for storing in the device twin storage 35 or 4 synchronization with the device twin storage in the IoT platform 50.

Thus, the protocol configuration 62, 65, 68 is stored as part of the device twin 61, 64, 67 of each connected industrial device 11, 12, 13. This digital twin 61, 64, 67 may be persisted in the IoT platform 50 or another IoT platform and may be accessible to users and applications. The configuration information 62, 65, 68 is used to store protocol configurations that are then applied by the data collection logic 34 located in the loT device 30. This configuration may include settings that are required to read using the protocol, write, and execute commands. It may contain: protocol address of datapoints for read, write and execute operations; time-related information, such as read intervals, timeouts, etc.; transformation rules to transform data; and/or other information.

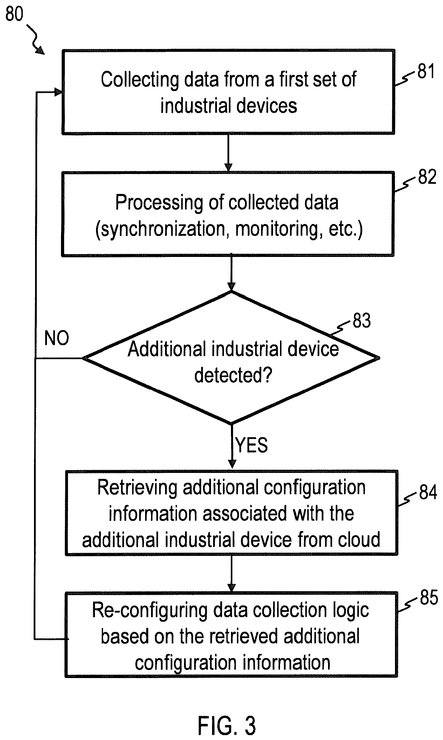

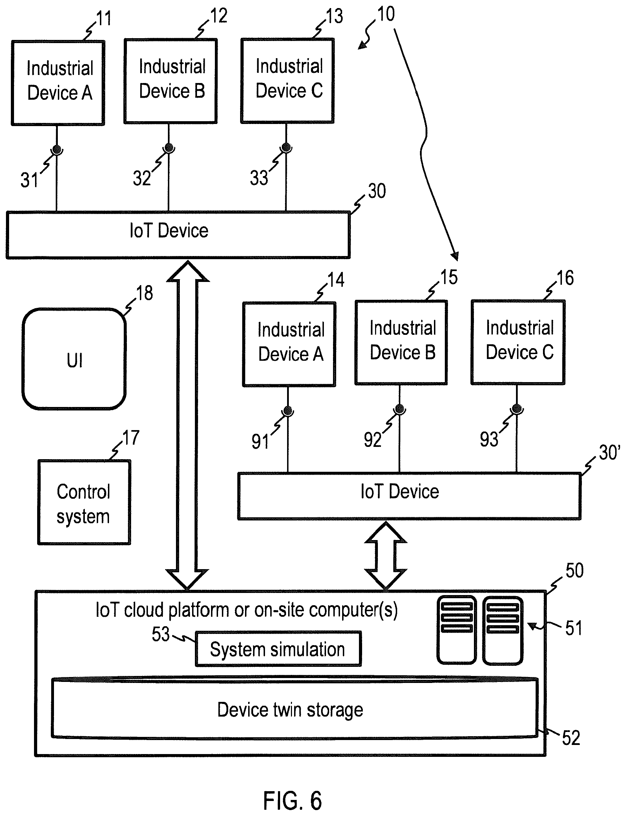

The device twin data including the configuration 61, 64, 67 is synchronized between IoT device 30 and the IoT platform 50 or another IoT platform. Only the device twin data which is relevant for an IoT device is synchronized. I.e., when only industrial devices 11, 12, 13 are connected to the IoT device 30, only the respective configuration information is synchronized, as will be explained in more detail with reference to Figures 3 to 5. Plural loT devices can thus be deployed to cover large installations and multiple operators, as will be described in more detail with reference to Figure 6. The device twin synchronization can be realized using the same, secure communication channel as the telemetry data.

The configuration is then be used by the data collection logic 34 to retrieve data from the industrial devices 11, 12, 13, transform it and send it as the telemetry data to the IoT platform 50 or other loT platform.

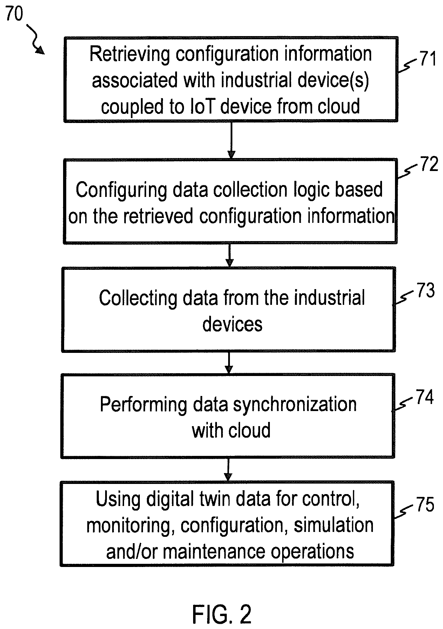

Figure 2 is a flow chart of a method 70 according to an embodiment. The method 70 may be performed automatically by the loT device 30.

At step 71, configuration information stored in the device twins 61, 64, 67 in the IoT platform 50 is retrieved by the IoT device 30. The configuration information is retrieved only for those industrial devices 11, 12, 13 that are coupled to the loT device 30. The configuration information may be retrieved during bidirectional synchronization of device twin data between the loT device 30 and the IoT platform 50.

At step 72, the data collection logic 34 of the loT device 30 is configured or controlled based on the retrieved configuration information. This may include setting when, how, and/or wherefrom (i.e., using which protocol addresses) data is read by the loT device 30 from the industrial devices 11, 12, 13. Configuring or controlling the data collection logic 34 may also include controlling how the collected data is processed by the IoT device 30 and/or how the collected data is transmitted by the IoT device 30.

At step 73, the data from the industrial devices 11, 12, 13 is collected by the IoT device 30. This may be done continually, i.e., in an ongoing basis, during operation of the industrial system 10.

At step 74, data synchronization may be performed between the IoT device 30 and the IoT platform 50 or another IoT platform.

At step 75, the digital twin data may be used for performing simulations, monitoring, control, maintenance or other operations. Step 75 may include simulating the industrial system or at least one industrial device of the industrial system. Alternatively or additionally, step 75 may include performing control operations for the industrial system, optionally including control that uses predicted operational states determined based on simulations. Alternatively or additionally, step 75 may include performing monitoring operations, optionally including predictive monitoring based on simulations. Alternatively or additionally, step 75 may include performing configuration or reconfiguration tasks, e.g. by using the device twins to determine new operation parameters for one or several of the industrial devices. Alternatively or additionally, step 75 may include controlling a user interface that allows an operator to interact with the device twins.

Changes in the industrial system 10 may automatically cause and adaptation or reconfiguration of the data collection logic 34 in the IoT device 30. For illustration, when a new industrial devices added to the industrial system 10 or an existing industrial device in the industrial system is replaced by a different industrial device, that techniques disclosed herein may cause the data collection logic 34 in the loT device 30 to be automatically adapted. This will be explained in more detail with reference to figures 3 to 5.

Figure 3 is a flow chart of a method 80 according to an embodiment. The method 80 may be performed automatically by the loT device 30.

At step 81, the loT device 30 collects data from a set of industrial devices of an industrial system 10.

At step 82, the collected data are processed. This may include synchronization of device twin data between the loT device 30 and the IoT platform 50, monitoring the state of the industrial system 10, controlling the industrial system 10, simulating the industrial system 10, controlling a user interface in dependence on the device twin data, or performing other actions related to the industrial system 10.

At step 83, it is determined whether an additional industrial device is detected. At step 84, configuration information for the additional industrial device is retrieved from the IoT platform. These steps may be implemented as an explicit detection by the IoT device 30. For illustration, when an additional industrial device is communicatively coupled with the IoT device 30, the IoT device 30 may use an identifier of the additional industrial device to retrieve additional configuration information from the IoT platform 50. Alternatively, the normal synchronization of device twin data between the IoT device 30 and the IoT platform 50 may cause configuration information associated with a newly connected additional industrial device to be transferred to the IoT device 30.

At step 85, the data collection logic 34 of the IoT device 30 is reconfigured based on the retrieved additional configuration information associated with the newly connected additional industrial device. Data collection continues in accordance with the reconfigured data collection logic.

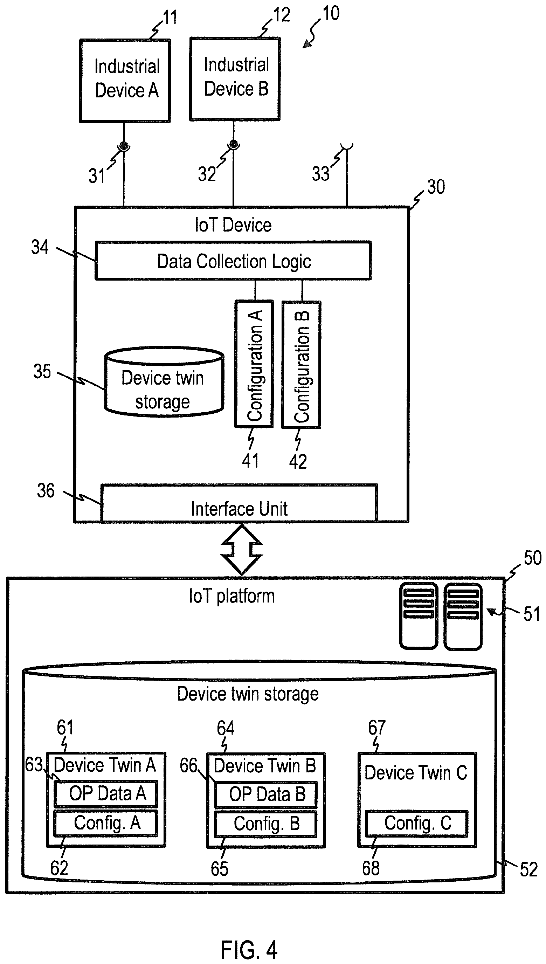

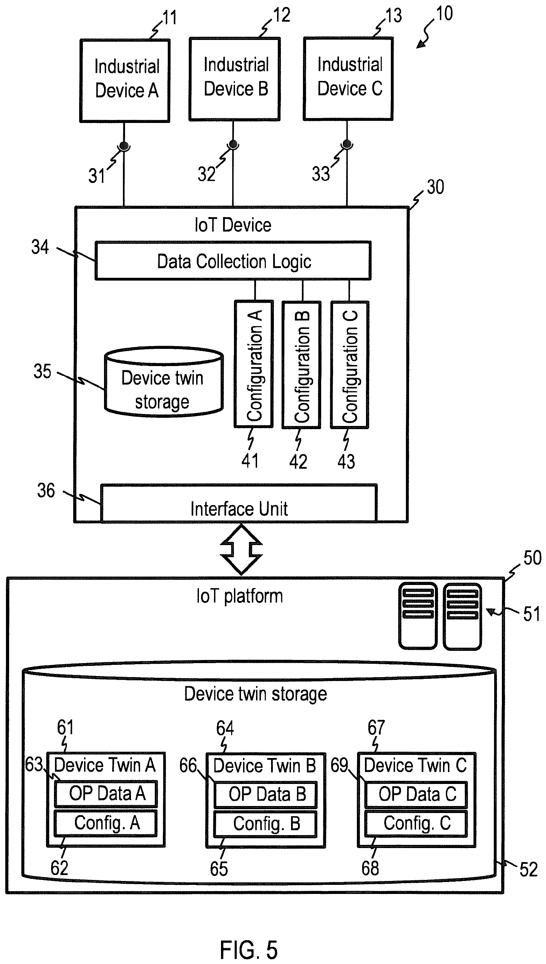

Figures 4 and 5 illustrate operation of the system according to an embodiment when a new industrial devices communicatively coupled with the loT device 30.

Figure 4 shows the system with only a first set of industrial devices 11, 12 (but not the third industrial device 13) communicatively coupled to the IoT device 30. Accordingly, the configuration information 41, 42 associated with the industrial devices 11, 12 (which is synchronized with the configuration information 62, 65 in the device twin storage of the IoT platform 50) is present in the IoT device 30, thus configuring the data collection logic 34 to operate in accordance with the configuration information 41, 42 associated with the industrial devices 11, 12.

Figure 5 shows the system when an additional industrial device 13 is communicatively coupled with the IoT device 30. Synchronization of the device twin data between the loT device 30 and the loT platform 50 causes the configuration information 68 to be provided by the IoT platform 50 to the loT device 30. As previously explained, this retrieved from of configuration information may be implemented by way of the device twin data synchronization, i.e., using the same secure channel that is also used to synchronize the device twin storage 35 of the IoT device with the device twins 61, 64, 67 in the device twin storage 52.

It will be appreciated that in the state shown in Figure 4, the configuration data 68 was already persistently stored in the IoT platform 50. The device twin data 67 associated with the industrial device 13 and stored in the device twin storage in the loT platform 50 does not yet include any operational data, because the loT device 30 has not yet started collecting data from the industrial device 13 and the state shown in Figure 4.

Figure 6 is a block diagram of a system according to another embodiment. The system includes a first IoT device 30 and a second IoT device 30'. Both IoT devices 30, 30' are communicatively coupled with the IoT platform 50. The first loT device 30 may be an Edge or Gateway that collects data from a first set of industrial devices 11, 12, 13. The second loT device 30' may be an Edge or Gateway that collects data from a second set of industrial devices 14, 15, 16. The second set of industrial devices 14, 15, 16 may be included in the same industrial system as the first set of industrial devices 11, 12, 13, or may be provided in a separate industrial system that may even be under the control of a different operator.

The synchronization mechanisms between the IoT devices 30, 30' and the IoT platform 50 cause configuration information including protocol parameters to be provided to an loT device 30, 30' only when it is communicatively coupled with an industrial device that requires those protocol parameters.

For illustration, if the first set of industrial devices 11, 12, 13 includes IEC61850-conformant devices but does not include any modbus-conformant devices, the IoT device 30 retrieves the relevant protocol parameters for the IEC61850-conformant devices from the IoT platform 50, but does not receive the protocol parameters for modbus-conformant devices from the IoT platform 50.

For further illustration, if the second set of industrial devices 14, 15, 16 includes IEC61850-conformant devices and modbus-conformant devices, the IoT device 30 retrieves the relevant protocol parameters for the IEC61850-conformant and for modbus-conformant devices from the IoT platform 50.

The structure shown in Figure 6 allows configuration information to be conveniently changed centrally in the loT platform 50. Modified protocol parameters will be communicated to the IoT devices 30, 30' in the process of device twin data synchronization.

The device twin data may be used for various purposes, such as monitoring industrial systems, control of industrial systems, simulation of industrial systems, control of a user interface used for controlling an industrial system, maintenance work, or other purposes. For illustration, the need for reconfiguring devices, taking control actions, or deploying personal for on-site maintenance work may be anticipated by performing simulations using the device twin data.

The system may include a user interface 18 which may be a human machine interface (HMI) for controlling the industrial system 10. A controller of the user interface 18 may access device twin data in the IoT platform 50 and may control the user interface 18 in dependence on the device twin data, possibly after further processing, which may include simulation.

Alternatively or additionally, the system may include a control system 17 for controlling the industrial system 10. The control system 17 may access device twin data in the loT platform 50 and may control the user interface 18 in dependence on the device twin data, possibly after further processing, which may include simulation.

Various effects are attained by the methods, devices, and systems according to embodiments. For illustration, the methods, devices, and systems allow an IoT device 30, 30' to be used with a variety of industrial devices operating in accordance with a variety of industrial protocols, without requiring the respective protocol configuration to be previously hardcoded into the IoT devices 30, 30'. The IoT devices 30, 33 allow the relevant information required for controlling the data collection logic 34 in the IoT device 30, 30' to be retrieved from the IoT platform 50 via the secure communication channel that at any rate has to be established for transmitting telemetry data. I.e., device twin synchronization including the exchange of the relevant configuration information takes place over the same secure channel as the transmission of telemetry data, obviating the need for an additional communication channel.

Thus, the methods, devices, and systems according to embodiments provide enhanced techniques for collecting data from industrial devices, such as substation automation devices.

The methods, devices, and systems can be used in a substation IoT solution, without being limited thereto. The methods, devices and systems can be used during live system operation (i.e., after commissioning) for simulation, monitoring, or a control operations, without being limited thereto.

While the invention has been described in detail in the drawings and foregoing description, such description is to be considered illustrative or exemplary and not restrictive. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed. The invention is defined by the appended claims.

## Claims

1. A method of configuring an Internet of Things, IoT, device (30) for collecting data from industrial devices (11-16), in particular power system devices, wherein the IoT device (30, 30') is coupled to an IoT platform (50) via a communication channel, wherein the IoT platform (50) stores device twin data (61, 64, 67) of the industrial devices (11-16), the device twin data (61, 64, 67) including configuration information (62, 65, 68), the method comprising:
performing a data synchronization of the device twin data (61, 64, 67) between the IoT device (30, 30') and the IoT platform (50);
retrieving, by the IoT device (30, 30') and via the communication channel, the configuration information (62, 65, 68) from the device twin data (61, 64, 67) stored in the IoT platform (50);
retrieving, by the IoT device (30, 30'), additional configuration information (62, 65, 68) from the IoT platform (50) in response to establishment of a communicative coupling between the IoT device (30, 30') and an additional industrial device; and
using, by the IoT device (30, 30'), the configuration information (62, 65, 68) for collecting data from the industrial devices (11-16).

2. The method of claim 1, wherein using the configuration information (62, 65, 68) comprises configuring a data collection logic (34) of the IoT device (30, 30').

3. The method of claim 2, wherein configuring the data collection logic (34) comprises setting one or several of
- protocol address of datapoints for read, write, and/or execute operations;
- read intervals;
- timeouts;
- rules for data transformation;
- parameters of data transmission from the IoT device (30, 30') to the IoT platform (50).

4. The method of claim 2 or claim 3, further comprising collecting, by the IoT device (30, 30'), data from the industrial devices (11-16) and generating, by the IoT device (30, 30'), data for transmission to the IoT platform (50) based on the data collected from the industrial devices (11-16).

5. The method of any one of the preceding claims, wherein the configuration information (62, 65, 68) comprises a protocol configuration and the method further comprises storing the protocol configuration in the IoT device (30, 30') for use by a data collection logic (34) of the IoT device (30, 30').

6. The method of any one of the preceding claims, wherein the device twin data (61, 64, 67) uses a strongly typed definition to model data associated with an industrial device (11-16) and the configuration information (62, 65, 68) associated with the industrial device (11-16).

7. The method of any one of the preceding claims, wherein the data synchronization is performed via the communication channel used by the IoT device (30, 30') to retrieve the configuration information (62, 65, 68), wherein the data synchronization is a bidirectional data synchronization between the IoT device (30, 30') and the IoT platform (50).

8. The method of any one of the preceding claims, wherein only device twin data (61, 64, 67) of industrial devices (11, 12, 13) which are connected to the IoT device (30, 30') is synchronized in the data synchronization.

9. The method of any one of the preceding claims, wherein the industrial devices (11-16) comprise devices of an industrial automation control system, in particular of a substation automation system.

10. The method of any one of the preceding claims, wherein the IoT device (30, 30') is an IoT Edge device or Gateway device.

11. An Internet of Things, IoT, device (30) for collecting data from industrial devices (11-16), in particular power system devices, comprising:
at least one first interface (31-33) adapted to communicatively couple the IoT device (30, 30') with the industrial devices (11-16);
a second interface (36) adapted to communicatively couple the IoT device (30, 30') to a IoT platform (50);
a memory or storage device adapted to store configuration information (62, 65, 68) retrieved via the second interface from device twin data (61, 64, 67) of the industrial devices (11-16) stored in the IoT platform (50) in response to establishment of a communicative coupling between the IoT device (30, 30') and the industrial devices (11-16); and
a circuit adapted to collect, via the at least one first interface (31-33), data from the industrial devices (11-16) in accordance with the retrieved configuration information (62, 65, 68), wherein the IoT device (30) is configured for performing a data synchronization of the device twin data (61, 64, 67) between the IoT device (30, 30') and the IoT platform (50).

12. The IoT device of claim 11, wherein the IoT device (30, 30') is adapted to perform the method of any one of claims 1 to 10.

13. A system, comprising:
the IoT device (30, 30') of claim 11 or claim 12;
an IoT platform computer system, comprising:
a memory or storage device (52) adapted to store device twin data (61, 64, 67) of industrial devices (11-16),
wherein the device twin data (61, 64, 67) for the industrial devices (11-16) includes configuration information (62, 65, 68) required by an Internet of Things, IoT, device (30, 30') when collecting data from the respective industrial device (11-16);
an interface adapted to output the configuration information (62, 65, 68) to the IoT device (30, 30'); and
a plurality of industrial devices (11-16) communicatively coupled to the IoT device (30, 30'), wherein the IoT device (30, 30') is adapted to collect data from the plurality of industrial devices (11-16) in accordance with configuration information (62, 65, 68) retrieved by the IoT device (30, 30') from the IoT platform (50) computer system.

## Patentansprüche

1. Verfahren zum Konfigurieren einer IoT (Internet of Things, Internet der Dinge)-Vorrichtung (30) zum Sammeln von Daten von industriellen Vorrichtungen (11-16), insbesondere Energiesystemvorrichtungen, wobei die IoT-Vorrichtung (30, 30') über einen Kommunikationskanal an eine IoT-Plattform (50) gekoppelt ist, wobei die IoT-Plattform (50) Vorrichtungszwillingsdaten (61, 64, 67) der industriellen Vorrichtungen (11-16) speichert und die Vorrichtungszwillingsdaten (61, 64, 67) Konfigurationsinformationen (62, 65, 68) aufweisen, wobei das Verfahren umfasst:
Durchführen einer Datensynchronisation der Vorrichtungszwillingsdaten (61, 64, 67) zwischen der IoT-Vorrichtung (30, 30') und der IoT-Plattform (50);
Abrufen, durch die IoT-Vorrichtung (30, 30') und über den Kommunikationskanal, der Konfigurationsinformationen (62, 65, 68) von den Vorrichtungszwillingsdaten (61, 64, 67), die in der IoT-Plattform (50) gespeichert sind;
Abrufen, durch die IoT-Vorrichtung (30, 30'), zusätzlicher Konfigurationsinformationen (62, 65, 68) von der IoT-Plattform (50) in Reaktion auf die Einrichtung einer kommunikativen Kopplung zwischen der IoT-Vorrichtung (30, 30') und einer zusätzlichen industriellen Vorrichtung; und
Verwenden, durch die IoT-Vorrichtung (30, 30'), der Konfigurationsinformationen (62, 65, 68) zum Sammeln von Daten von den industriellen Vorrichtungen (11-16).

2. Verfahren nach Anspruch 1, wobei das Verwenden der Konfigurationsinformationen (62, 65, 68) das Konfigurieren einer Datenerfassungslogik (34) der IoT-Vorrichtung (30, 30') umfasst.

3. Verfahren nach Anspruch 2, wobei das Konfigurieren der Datenerfassungslogik (34) das Einstellen eines oder mehrerer hiervon umfasst:
- Protokolladresse von Datenpunkten für Lese-, Schreib- und/oder Ausführungsoperationen;
- Leseintervalle;
- Timeouts;
- Regeln für Datentransformation;
- Parameter der Datenübertragung von der IoT-Vorrichtung (30, 30') zu der IoT-Plattform (50).

4. Verfahren nach Anspruch 2 oder Anspruch 3, ferner umfassend das Erfassen, durch die IoT-Vorrichtung (30, 30'), von Daten von den industriellen Vorrichtungen (11-16) und das Generieren, durch die IoT-Vorrichtung (30, 30'), von Daten zur Übertragung an die IoT-Plattform (50) basierend auf den Daten, die von den industriellen Vorrichtungen (11-16) erfasst werden.

5. Verfahren nach einem der vorstehenden Ansprüche, wobei die Konfigurationsinformationen (62, 65, 68) eine Protokollkonfiguration umfassen und das Verfahren ferner das Speichern der Protokollkonfiguration in der IoT-Vorrichtung (30, 30') zur Verwendung durch eine Datenerfassungslogik (34) der IoT-Vorrichtung (30, 30') umfasst.

6. Verfahren nach einem der vorstehenden Ansprüche, wobei die Vorrichtungszwillingsdaten (61, 64, 67) eine stark typisierte Definition verwenden, um mit einer industriellen Vorrichtung (11-16) verknüpfte Daten und die mit der industriellen Vorrichtung (11-16) verknüpften Konfigurationsinformationen (62, 65, 68) zu modellieren.

7. Verfahren nach einem der vorstehenden Ansprüche, wobei die Datensynchronisation über den Kommunikationskanal durchgeführt wird, der von der IoT-Vorrichtung (30, 30') verwendet wird, um die Konfigurationsinformationen (62, 65, 68) abzurufen, wobei die Datensynchronisation eine bidirektionale Datensynchronisation zwischen der IoT-Vorrichtung (30, 30') und der IoT-Plattform (50) ist.

8. Verfahren nach einem der vorstehenden Ansprüche, wobei nur Vorrichtungszwillingsdaten (61, 64, 67) industrieller Vorrichtungen (11, 12, 13), die mit der IoT-Vorrichtung (30, 30') verbunden sind, bei der Datensynchronisation synchronisiert werden.

9. Verfahren nach einem der vorstehenden Ansprüche, wobei die industriellen Vorrichtungen (11-16) Vorrichtungen eines industriellen Automatisierungssteuerungssystems, insbesondere eines Substation-Automatisierungssystems, umfassen.

10. Verfahren nach einem der vorstehenden Ansprüche, wobei die IoT-Vorrichtung (30, 30') eine IoT-Edge-Vorrichtung oder eine IoT-Gateway-Vorrichtung ist.

11. IoT (Internet of Things, Internet der Dinge)-Vorrichtung (30) zum Sammeln von Daten von industriellen Vorrichtungen (11-16), insbesondere Energiesystemvorrichtungen, umfassend:
wenigstens eine erste Schnittstelle (31-33), die dafür ausgelegt ist, die IoT-Vorrichtung (30, 30') kommunikativ mit den industriellen Vorrichtungen (11-16) zu koppeln;
eine zweite Schnittstelle (36), die dafür ausgelegt ist, die IoT-Vorrichtung (30, 30') kommunikativ an eine IoT-Plattform (50) zu koppeln;
eine Speicher- oder Datenspeichervorrichtung, die dafür ausgelegt ist, Konfigurationsinformationen (62, 65, 68) zu speichern, die über die zweite Schnittstelle von Vorrichtungszwillingsdaten (61, 64, 67) der industriellen Vorrichtungen (11-16), welche in der IoT-Plattform (50) gespeichert sind, in Reaktion auf die Einrichtung einer kommunikativen Kopplung zwischen der IoT-Vorrichtung (30, 30') und den industriellen Vorrichtungen (11-16) abgerufen werden; und
eine Schaltung, die dafür ausgelegt ist, über die wenigstens eine erste Schnittstelle (31-33) Daten von den industriellen Vorrichtungen (11-16) gemäß den abgerufenen Konfigurationsinformationen (62, 65, 68) zu sammeln, wobei die IoT-Vorrichtung (30) dafür ausgelegt ist, eine Datensynchronisation der Vorrichtungszwillingsdaten (61, 64, 67) zwischen der IoT-Vorrichtung (30, 30') und der IoT-Plattform (50) durchzuführen.

12. IoT-Vorrichtung nach Anspruch 11, wobei die IoT-Vorrichtung (30, 30') dafür ausgelegt ist, das Verfahren nach einem der Ansprüche 1 bis 10 durchzuführen.

13. System, umfassend:
die IoT-Vorrichtung (30, 30') nach Anspruch 11 oder Anspruch 12;
ein IoT-Plattform-Computersystem, umfassend:
eine Speicher- oder Datenspeichervorrichtung (52), die dafür ausgelegt ist, Vorrichtungszwillingsdaten (61, 64, 67) industrieller Vorrichtungen (11-16) zu speichern, wobei die Vorrichtungszwillingsdaten (61, 64, 67) für die industriellen Vorrichtungen (11-16) Konfigurationsinformationen (62, 65, 68) beinhalten, die von einer IoT (Internet of Things, Internet der Dinge)-Vorrichtung (30, 30') benötigt werden, wenn diese Daten von der jeweiligen industriellen Vorrichtung (11-16) erfasst;
eine Schnittstelle, die dafür ausgelegt ist, die Konfigurationsinformationen (62, 65, 68) an die IoT-Vorrichtung (30, 30') auszugeben; und
mehrere industrielle Vorrichtungen (11-16), die kommunikativ an die IoT-Vorrichtung (30, 30') gekoppelt sind, wobei die IoT-Vorrichtung (30, 30') dafür ausgelegt ist, Daten von den mehreren industriellen Vorrichtungen (11-16) gemäß Konfigurationsinformationen (62, 65, 68) zu erfassen, die durch die IoT-Vorrichtung (30, 30') von dem IoT-Plattform (50)-Computersystem abgerufen werden.

## Revendications

1. Procédé de configuration d'un dispositif (30) de l'Internet des objets, IoT, pour la collecte de données provenant de dispositifs industriels (11-16), en particulier de dispositifs de systèmes d'alimentation, où le dispositif IoT (30, 30') est couplé à une plateforme IoT (50) par l'intermédiaire d'un canal de communication, où la plateforme IoT (50) stocke les données de dispositifs jumeaux (61, 64, 67) des dispositifs industriels (11-16), les données de dispositifs jumeaux (61, 64, 67) comprenant des informations de configuration (62, 65, 68), le procédé comprenant les étapes suivantes
effectuer une synchronisation de données des données de dispositifs jumeaux (61, 64, 67) entre le dispositif IoT (30, 30') et la plateforme IoT (50) ;
récupérer, par le dispositif IoT (30, 30') et par l'intermédiaire du canal de communication, les informations de configuration (62, 65, 68) à partir des données de dispositifs jumeaux (61, 64, 67) stockées dans la plateforme IoT (50) ;
récupérer, par le dispositif IoT (30, 30'), des informations de configuration supplémentaires (62, 65, 68) depuis la plateforme IoT (50) en réponse à l'établissement d'un couplage communicatif entre le dispositif IoT (30, 30') et un dispositif industriel supplémentaire ; et
utiliser, par le dispositif IoT (30, 30'), les informations de configuration (62, 65, 68) pour collecter des données auprès des dispositifs industriels (11-16).

2. Procédé selon la revendication 1, dans lequel l'utilisation des informations de configuration (62, 65, 68) comprend la configuration d'une logique de collecte de données (34) du dispositif IoT (30, 30').

3. Procédé selon la revendication 2, dans lequel la configuration de la logique de collecte de données (34) comprend le réglage d'un ou de plusieurs éléments parmi
- l'adresse de protocole des points de données pour les opérations de lecture, d'écriture et/ou d'exécution ;
- les intervalles de lecture ;
- les temps d'attente ;
- les règles de transformation de données ;
- les paramètres de transmission des données depuis le dispositif IoT (30, 30') vers la plateforme IoT (50).

4. Procédé selon la revendication 2 ou la revendication 3, comprenant en outre la collecte, par le dispositif IoT (30, 30'), de données provenant des dispositifs industriels (11-16) et la génération, par le dispositif IoT (30, 30'), de données à transmettre à la plateforme IoT (50) sur la base des données collectées auprès des dispositifs industriels (11-16).

5. Procédé selon l'une quelconque des revendications précédentes, dans lequel les informations de configuration (62, 65, 68) comprennent une configuration de protocole et le procédé comprend en outre le stockage de la configuration de protocole dans le dispositif IoT (30, 30') en vue de son utilisation par une logique de collecte de données (34) du dispositif IoT (30, 30').

6. Procédé selon l'une quelconque des revendications précédentes, dans lequel les données de dispositifs jumeaux (61, 64, 67) utilisent une définition fortement typée pour modéliser les données associées à un dispositif industriel (11-16) et les informations de configuration (62, 65, 68) associées au dispositif industriel (11-16).

7. Procédé selon l'une quelconque des revendications précédentes, dans lequel la synchronisation des données est effectuée par l'intermédiaire du canal de communication utilisé par le dispositif IoT (30, 30') pour récupérer les informations de configuration (62, 65, 68), la synchronisation des données étant une synchronisation de données bidirectionnelle entre le dispositif IoT (30, 30') et la plateforme IoT (50).

8. Procédé selon l'une quelconque des revendications précédentes, dans lequel seules les données de dispositifs jumeaux (61, 64, 67) des dispositifs industriels (11, 12, 13) qui sont connectés au dispositif IoT (30, 30') sont synchronisées dans la synchronisation de données.

9. Procédé selon l'une quelconque des revendications précédentes, dans lequel les dispositifs industriels (11-16) comprennent des dispositifs d'un système de contrôle d'automatisation industrielle, en particulier d'un système d'automatisation de sous-station.

10. Procédé selon l'une quelconque des revendications précédentes, dans lequel le dispositif IoT (30, 30') est un dispositif IoT Edge ou un dispositif Gateway.

11. Dispositif de l'Internet des objets, IoT, (30) pour collecter des données à partir de dispositifs industriels (11-16), en particulier de dispositifs de réseau électrique, le dispositif comprenant :
au moins une première interface (31-33) adaptée pour coupler de manière communicative le dispositif IoT (30, 30') avec les dispositifs industriels (11-16) ;
une deuxième interface (36) adaptée pour coupler de manière communicative le dispositif IoT (30, 30') à une plateforme IoT (50) ;
une mémoire ou un dispositif de stockage adaptés pour stocker des informations de configuration (62, 65, 68) récupérées par l'intermédiaire de la deuxième interface à partir des données de dispositifs jumeaux (61, 64, 67) des dispositifs industriels (11-16) stockées dans la plate-forme IoT (50) en réponse à l'établissement d'un couplage communicatif entre le dispositif IoT (30, 30') et les dispositifs industriels (11-16) ; et
un circuit adapté pour collecter, par l'intermédiaire de l'au moins une première interface (31-33), des données provenant des dispositifs industriels (11-16) conformément aux informations de configuration récupérées (62, 65, 68), le dispositif IoT (30) étant configuré pour effectuer une synchronisation de données des données de dispositifs jumeaux (61, 64, 67) entre le dispositif IoT (30, 30') et la plateforme IoT (50).

12. Dispositif IoT selon la revendication 11, dans lequel le dispositif IoT (30, 30') est adapté pour exécuter le procédé de l'une quelconque des revendications 1 à 10.

13. Système comprenant :
le dispositif IoT (30, 30') de la revendication 11 ou de la revendication 12 ;
un système informatique de plateforme IoT, comprenant :
une mémoire ou un dispositif de stockage (52) adaptés pour stocker des données de dispositifs jumeaux (61, 64, 67) de dispositifs industriels (11-16), où les données de dispositifs jumeaux (61, 64, 67) pour les dispositifs industriels (11-16) comprennent des informations de configuration (62, 65, 68) requises par un dispositif de l'Internet des objets, IoT, (30, 30') lors de la collecte de données depuis le dispositif industriel respectif (11-16) ;
une interface adaptée pour délivrer en sortie les informations de configuration (62, 65, 68) vers le dispositif IoT (30, 30') ; et
une pluralité de dispositifs industriels (11-16) couplés de manière communicative au dispositif IoT (30, 30'), où le dispositif IoT (30, 30') est adapté pour collecter des données auprès de la pluralité de dispositifs industriels (11-16) conformément aux informations de configuration (62, 65, 68) récupérées par le dispositif IoT (30, 30') à partir du système informatique de la plateforme IoT (50) .
